# EUROPEAN PATENT APPLICATION

(11) **EP 0 988 939 A1**
(43) Date of publication of application: **29.03.2000**
(21) Application number: 99307141.4
(22) Date of filing: 09.09.1999
(51) Int. Cl.: B25J 19/00, A01N 25/24

(54) **Industrial robot**

(30) Priority: 10.09.1998 JP 27246698
(71) Applicant: Fanuc Ltd, Minamitsuru-gun, Yamanashi 401-0597 (JP)
(72) Inventor: Kinoshita, Satoshi, Minamitsuru-gun, Yamanashi 401-0511 (JP); Nakagawa, Hiroshi, Minamitsuru-gun, Yamanashi 401-0511 (JP)
(74) Representative: Billington, Lawrence Emlyn

(57) **Abstract**

An antimicrobial treatment by resin coating is applied onto an outer surface of a first casing and outer surfaces of casing parts of a second axis arm and a third axis arm, and an outer surface of a rod of a first axis (J1), which compose exposed surfaces of an industrial robot, and oil seals mounted on each portion are made of a material containing antimicrobials. The resistance to rusting and the resistance to chemical attack are achieved at a low cost without changing the quality of materials of the main portion of the robot, and further, reproduction of bacteria is prevented by the antimicrobial effect thereof, so that the maintaining works of washing, disinfecting, or the like of the industrial robot can also be simplified.

## Description

The present invention relates to an improvement of an industrial robot.

It is required for an industrial robot which handles foods, medical products, sanitary goods, or the like that the robot itself is in a sanitary condition. As a method of keeping such a robot in a sanitary condition of the robot, there is a method in which the robot is made to have a water proof structure so that it may be washed and the robot is periodically washed and disinfected by chemicals. For example, at a food processing site, in order to prevent pieces of foods adhered to the robot during the operation from rotting and to prevent bacteria from reproducing, washing and disinfecting of the robot by chemicals are performed after the end of the work. However, according to this method, there is such a problem that the sanitary condition of the robot completely depends on the washing and disinfecting operations. That is, the sanitary condition of the robot cannot be maintained unless the washing and disinfecting operations by chemicals are always performed.

Furthermore, in order to make a composition which can withstand the washing and disinfecting operations by chemicals, for example, as shown in Japanese Patent Application Laid-Open No. 11-33973, it is required to employ materials excellent in resistance to rusting and resistance to chemical attack such as stainless or aluminum processed by the hard alumite treatment as a material of the surface of the robot.

However, these materials are expensive, and in the case where materials such as iron or aluminum which are usually used for a robot are displaced by these materials, there is such a problem that cost rising of the robot is caused.

It is an object of the present invention to provide an industrial robot in which the disadvantage of the prior art is reduced or solved and the sanitary condition is good and the maintainance work is easy, at a low cost.

According to aspects of the present invention, an antimicrobial treatment is applied to a part of or the whole of a member or the members of the exposed surface of the mechanical portion of a robot, or a part of or the whole of the exposed portion of the wrist of a robot, and/or a part of or the whole of that member or those members is made of a material containing antimicrobials. Furthermore, the antimicrobial treatment can also easily be performed by the coating of resin with which antimicrobials are mixed or the like.

The antimicrobial treatment is applied onto the parts of a robot in which the sanitary condition is required, or the parts in which the sanitary condition is required is made of a material containing antimicrobials, so that the reproduction of bacteria may be restrained. That is, since the robot itself has the antimicrobial action, it is unnecessary to often perform washing and disinfecting of the robot by chemicals, so that the maintainability of the robot may be improved. Furthermore, since it is unnecessary to often use chemicals for washing and disinfecting, it is unnecessary to always employ expensive materials excellent in resistance to rusting and resistance to chemical attack such as stainless or aluminum processed by the hard alumite treatment as each of the members, so that the cost of the robot may be reduced.

Furthermore, when washing a robot processed by the antimicrobial treatment, it is unnecessary for the chemicals used for washing and disinfecting to always be strong, and moreover, in some cases, washing with fresh water is also sufficient, and therefore, the subsequent treatment after the works of washing and disinfecting can easily be performed. Furthermore, if each of the members contains antimicrobials having resistance to rusting and resistance to chemical attack, the sanitary condition of the robot can be kept for a term longer than that of a conventional one by performing the works of washing and disinfecting similar to those of a conventional one, in cooperation with the antimicrobial action of the robot itself.

According to the present invention, it is possible to provide an industrial robot in which the sanitary condition is good and the maintainance work is easy, at a low cost.

The foregoing and other features of the invention will become apparent from the following description of preferred embodiments of the invention with reference to the accompanying drawings, in which:
Fig. 1 is a sectional view of an industrial robot according to a first embodiment of the present invention; and
Fig. 2 is a sectional view of an industrial robot according to a second embodiment of the present invention.

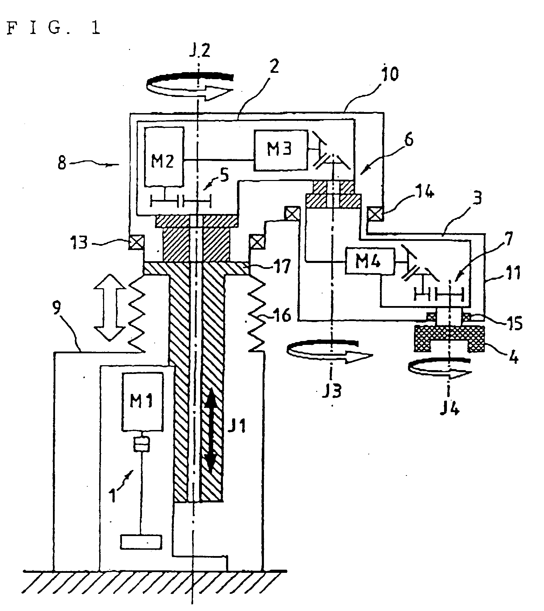

A first embodiment of the present invention will be described with reference to Fig. 1.

A mechanical portion of an industrial robot (hereafter, referred to simply as a robot) includes one piece of translation axis J1 and three pieces of rotary axis J2, J3, and J4. At the tip of the rotary axis J4, a work tool 4 is mounted.

The translation axis J1 which moves a second axis arm 2 up and down is driven in the vertical direction by a servo motor M1 through a ball screw and nut mechanism 1 or the like. Furthermore, the rotary axis J2 which rotates the second axis arm 2 in the horizontal plane, the rotary axis J3 which rotates a third axis arm 3 in the horizontal plane, and the rotary axis J4 which rotates the work tool 4 in the horizontal plane are driven and rotated by servo motors M2, M3, M4 through hollow reduction gears 5, 6 and a reduction gear 7, respectively.

An outer wall 8 covering the mechanical portion of a robot comprises a first casing 9 which contains the ball screw and nut mechanism 1, the servo motor M1 or the like, a second casing 10 (to be the second axis arm 2) which contains the servo motors M2, M3, the hollow reduction gears 5, 6 or the like, and a third casing 11 (to be the third axis arm 3) which contains the servo motor M4, the reduction gear 7 or the like. The third axis arm 3 (third casing 11) serves as a wrist of the robot.

In the sliding portion between the first casing 9 and the translation axis J1, an oil seal 12 is provided for keeping the dust proof and water proof functions. Furthermore, in the rotary portion between the translation axis J1 and the second casing 10, in the rotary portion between the second casing 10 and the third casing 11, and in the rotary portion between the third casing 11 and the rotary axis J4, oil seals 13, 14, 15 are provided for keeping the dust proof and water proof functions.

Moreover, onto the outer surfaces (exposed surfaces) of the first casing 9, the second casing 10, and the third casing 11, the antimicrobial treatment is applied by the coating of a resin such as fluororesin or nylon resin with which antimicrobials are mixed.

As antimicrobials to be mixed with the resin, (1) the ceramic antimicrobials in which ions of silver, copper, zinc, or the like having the excellent antimicrobial effect against general bacteria or molds are taken in the ceramic crystal, (2) the antimicrobials in which silver, copper, zinc, or the like is taken in the inorganic simple substance of silver, zeolite, or antimicrobial silicagel such as zeolite or silicagel in the form of ions, a complex or a metal, or (3) the natural antimicrobials which are created by extracting components having the antimicrobial effect from fruits or the like are used. It should be noted that the above examples of antimicrobials are a part thereof, and the present invention is not limited to these.

Moreover, it is also possible to provide a painting treatment by paints with which these antimicrobials are mixed, instead of the above coating.

Furthermore, onto the outer surface portion of the rod of the first axis J1 exposed to the outside, the antimicrobial treatment by the resin coating similar to that in the above description is also applied. In this case, since the outer surface portion of the first axis J1 often slides relative to the oil seal 12, it is desirable to apply a resin coating excellent in resistance to abrasions.
Furthermore, at least onto the part of the fourth axis J4 coming out of third casing 11, the antimicrobial treatment by the resin coating similar to that in the above description is also applied.

Moreover, since it is also highly possible that the oil seals 12 to 15 composing the mechanical portion of the robot is subjected to abrasions or the like inside and outside thereof due to turning and sliding, the oil seals themselves are made of a material containing antimicrobials. Specifically, it is preferable that, at the stage of forming the oil seals 12 to 15, such ceramic antimicrobials as mentioned above or the like are mixed with resin, synthetic rubber or the like which will be a material of the bellows.

Since the member itself of the exposed surface of the mechanical portion of the robot is made of a raw material similar to that of a conventional one (for example, the first casing 9 is made of a cast of iron, and the second and third casings are made of a cast of aluminum), the manufacturing cost of a robot according to the present invention is equivalent to the manufacturing cost of a conventional robot plus the cost of the antimicrobial treatment. Furthermore, since the resistance to rusting and the resistance to chemical attack are given by the above coating or painting treatment regardless of the raw material of the member, it is also possible to sufficiently withstand the washing and disinfecting works by chemicals or water.

Furthermore, since most of the members of the above first casing 9, the casings of the second axis arm 2 and third axis arm 3, the rod of the first axis J1, or the like are exterior parts, it is unnecessary to consider the increase of the thickness caused by the resin coating or paint coating, and as for the size data or the like in designing and processing relating to the metal parts of these members, the size data or the like similar to those of a conventional one can be used as they are. The rod of the first axis J1 serves as the fitting part to the oil seal 12, and since there are elasticity and toughness on the oil seal 12 side, the increase of the external size caused by the coating or the like with respect to the rod of the first axis J1 is not a problem.

In the case where the antimicrobial treatment by coating or painting is applied to the whole of the exposed surface of the mechanical portion of the robot, it is possible to separately perform such treatment to the parts not assembled yet, or it is also possible to apply the antimicrobial treatment to the whole of the robot in the lump after assembling of the robot is completed. In the case where the antimicrobial treatment is applied in the lump after the assembling is completed, the treatment work should be performed in the state where all parts which may be exposed to the outside are exposed to the outside, for example, in the state where the rod of the first axis J1 is completely exposed.

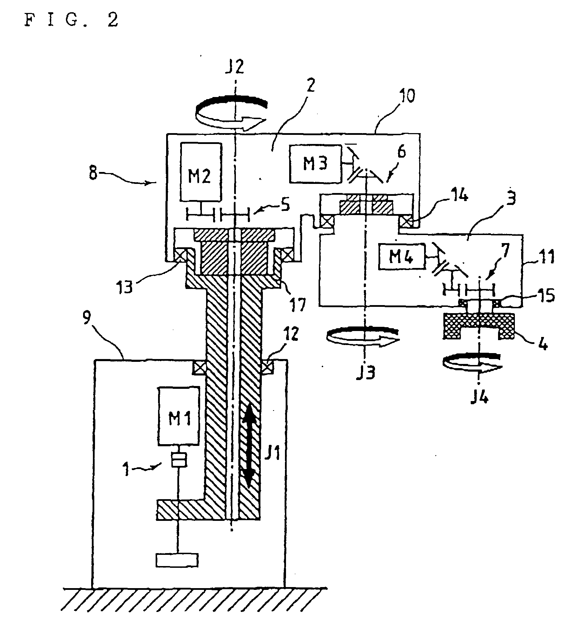

Next, a second embodiment of the present invention will be described with reference to Fig. 2.

A robot shown in Fig. 2 has a structure mostly similar to that of the robot shown in Fig. 1. However, in the mechanical portion of the robot shown in Fig. 2, a cylindrical and flexible bellows 16 is attached concentric with the translation axis J1 between the upper surface of the first casing 9 and the lower surface of the upper end flange portion 17 of the translation axis J1, instead of the oil seal 12 as shown in Fig. 1 which is put between the first casing 9 and the translation axis J1, Therefore, when the translation axis J1 moves in the direction of the axis thereof, the bellows 16 connected to the first casing 9 expands and contracts, so that the tight seal of the first casing 9 can be kept. That is, the dust proof and water proof functions thereof can be maintained.

To this robot shown in Fig. 2, the antimicrobial treatment similar to that given to the robot shown in Fig. 1 is provided. That is,
(1) The antimicrobial treatment is applied to the member of the exposed surface of the mechanical portion of the robot, or the member is configured by a material containing antimicrobials.
(2) The antimicrobial treatment is applied to the exposed member of the wrist of the robot, or the member is configured by a material containing antimicrobials.
(3) The treatment of natural antimicrobials or ceramic antimicrobials is applied to the member of the exposed surface of the mechanical portion of the robot.
(4) The treatment of natural antimicrobials or ceramic antimicrobials is applied to the wrist of the robot.
(5) The exposed surface of the mechanical portion of the robot is coated by a resin with which antimicrobials are mixed. Fluororesin or nylon resin is used as this coating material.
(6) The wrist of the robot is coated by a resin with which antimicrobials are mixed. Fluororesin or nylon resin is used as this coating material.
(7) The exposed surface of the mechanical portion of the robot is processed by the painting treatment by using a paint with which antimicrobials are mixed.
(8) The wrist of the robot is processed by the painting treatment by using a paint with which antimicrobials are mixed.

The bellows 12 in the robot shown in Fig. 2 is one element of the mechanical portion of the robot, which has an exposed surface. However, if a resin with which antimicrobials are mixed is coated onto this bellows 12, there is such a possibility that a crack or a peeling may occur at the surface layer portion thereof by the extraction and contraction of the bellows 12. Therefore, it is preferable that the bellows 12 itself is made of a material containing antimicrobials having the antimicrobial effect, instead of providing coating to the bellows 12. Specifically, as in the case of forming of the above-described oil seals 12 to 15, it is preferable that, at the stage of forming a bellows 16, such ceramic antimicrobials as mentioned above or the like are mixed with resin, synthetic rubber or the like which will be a material of the bellows.

Both of the robot according to the first embodiment and the robot according to the second embodiment are made to have the antimicrobial effect all over the exposed surface of the mechanical portion of the robot and the exposed surface of the wrist of the robot.

However, determination as to which parts of the robot should have an antimicrobial effect may be done according to the service environment or the like of the robot. For example, it is also possible to apply the antimicrobial treatment and antimicrobials only to the casing portion of the third axis arm 3 composing the wrist which performs the actual handling work or the casing portion of the second axis arm 2 where this third axis arm 3 is provided.

For example, in the case where the whole robot is brought into a highly sanitary environment of a food manufacturing plant, a medical product manufacturing plant, or the like to perform the works, it is preferable that the antimicrobial effect is provided all over the exposed surface of the mechanical portion of the robot and the exposed surface of the wrist of the robot. On the other hand, in the case where the robot is used to handle a simple sanitary product or the like, it may be sufficient to provide the antimicrobial effect only to the specific parts of that robot.

According to the present invention, the reproduction of bacteria is restrained by the antimicrobial coating or antimicrobials at the parts of the robot where the sanitary environment is required, and therefore, the sanitary condition thereof can be kept for a long term without frequent washing and disinfecting of the robot by using chemicals, so that the maintainability of the robot may be improved.

Furthermore, as a mechanical portion and/or a wrist of a robot is applied antimicrobial treatment or is made of a material containing antimicrobials, the problem of reproduction of bacteria or the like is restrained beforehand. Consequently, chemicals to be used for washing and disinfecting need not be strong, and further, in some cases, fresh water may be used for washing and disinfecting, with the result that the subsequent treatment following the washing and disinfecting works can easily be performed. Furthermore, if the washing and disinfecting works are performed at an ordinary level, the robot can be kept sanitary over a long period of time, as compared with the case of the conventional robot.

## Claims

1. An industrial robot, wherein an antimicrobial treatment is applied onto a member of an exposed surface of a mechanical portion of the robot, and/or said member of the exposed surface is made of a material containing antimicrobials.

2. An industrial robot, wherein an antimicrobial treatment is applied onto an exposed member of a wrist of a robot, and/or said exposed member of the wrist is made of a material containing antimicrobials.

3. An industrial robot, wherein a treatment of natural antimicrobials or ceramic antimicrobials is applied onto a member of an exposed surface of a mechanical portion of a robot.

4. An industrial robot, wherein a treatment of natural antimicrobials or ceramic antimicrobials is applied onto a wrist of a robot.

5. An industrial robot, wherein an exposed surface of a mechanical portion of a robot is coated by a resin with which antimicrobials are mixed.

6. An industrial robot, wherein a wrist of a robot is coated by a resin with which antimicrobials are mixed.

7. The industrial robot according to claim 5 or 6, wherein fluororesin or nylon resin is used as a coating material.

8. An industrial robot, wherein an exposed surface of a mechanical portion of a robot is processed by a painting treatment by using a paint with which antimicrobials are mixed.

9. An industrial robot, wherein a wrist of a robot is processed by a painting treatment by using a paint with which antimicrobials are mixed.
